(19)

Europäisches
Patentamt
European
Patent Office
Office européen
des brevets

(11) **EP 3 133 536 A1**

(12) **EUROPEAN PATENT APPLICATION**

(43) Date of publication:
**22.02.2017 Bulletin 2017/08**

(51) Int Cl.:
*G06Q 10/02* (2012.01)  *G01C 21/00* (2006.01)

(21) Application number: **16183224.1**

(22) Date of filing: **08.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.08.2015 US 201514831326**

(71) Applicant: **Xerox Corporation**
**Norwalk, CT 06856-4505 (US)**

(72) Inventors:
• **Céret, Eric**
  **38000 Grenoble (FR)**
• **Castellani, Stefania**
  **38240 Meylan (FR)**
• **LEHOUX, Vassilissa**
  **38100 Grenoble (FR)**

(74) Representative: **Gill Jennings & Every LLP**
**The Broadgate Tower**
**20 Primrose Street**
**London EC2A 2ES (GB)**

(54) **SYSTEM AND METHOD FOR MULTI-FACTORED-BASED RANKING OF TRIPS**

(57)     A trip-planning method and system employ a user profile for each user which includes the user's preferences for each of a plurality of transportation modes, user goals, and optionally user constraints on trips. Inferred user preference (resp. goal) values and stated user preference (resp. goal) values are aggregated using a coefficient which places more emphasis on stated goals/preferences that have been recently set. Candidate itineraries for a requested user trip that meet the user's constraints are ranked based on the aggregated goal and preference values and the costs/contributions of each itinerary to the respective goal/preference. A subset of the ranked itineraries may be output to the user for the user to select one for making the trip.

FIG. 1

EP 3 133 536 A1

**Description**

BACKGROUND

The exemplary embodiment relates to trip planning and finds particular application in connection with a system and method for ranking trips based on personal factors.

Providing support for travelers in trip planning has been an active field of study. Systems have been designed to help travelers to define itineraries for their trips and to choose the corresponding transportation modes. However, such systems generally propose itineraries that are based on assumptions about a population of travelers. For example it may be assumed that travelers prefer shorter trips to longer ones. Data on collective traveler behavior may be used to rank itineraries of similar durations. For example, it may be determined that more travelers traveling between points A and B use the train than the bus.

However, travelers may have individual needs and preferences which differ from the collective behavior of a group of travelers. When presented with itineraries which do not meet the user's expectations, the user could choose to review a larger number of possible itineraries in order to find one that is of unique interest. However, travelers usually do not wish to expend a large amount of time reviewing different itineraries or are not made aware of alternatives which would better suit their interests. Additionally, users may not be aware of how their individual preferences should impact their choice of itineraries.

There remains a need for a system and method for assisting a user in planning a trip which is personalized to the individual user without unduly increasing the complexity of the selection process for the user or the system.

INCORPORATION BY REFERENCE

The following references, the disclosures of which are incorporated herein by reference in their entireties, are mentioned:

US Pat. No. 5,021,953, issued June 4, 1991, entitled TRIP PLANNER OPTIMIZING TRAVEL ITINERARY SELECTION CONFORMING TO INDIVIDUALIZED TRAVEL POLICIES, by Webber, et al.
US Pat. No. 6,622,084, issued September 16, 2003, entitled TRAVEL ROUTE PLANNER SYSTEM AND METHOD, by Cardno, et al.
US Pat. No. 7,925,540, issued April 12, 2011, entitled METHOD AND SYSTEM FOR AN AUTOMATED TRIP PLANNER, by Orttung et al.
US Pat. No. 8,494,771, issued July 23, 2013, entitled JOURNEY PLANNING IN PUBLIC TRANSPORTATION NETWORKS, by Delling, et al.
US Pat. No. 8,583,363, issued November 12, 2013, entitled DETERMINING ALTERNATIVE ROUTES, by Abraham, et al.
US Pat. No. 8,712,676, issued April 29, 2014, entitled METHOD FOR COMPUTING AN ENERGY EFFICIENT ROUTE, by Hiestermann, et al.
US Pat. No. 8,725,612, issued May 13, 2014, entitled PERSONALIZED REAL-TIME LOCATION-BASED TRAVEL MANAGEMENT, by Mundinger, et al.
US Pat. No. 8,738,286, issued May 27, 2014, entitled TRANSIT ROUTING SYSTEM FOR PUBLIC TRANSPORTATION TRIP PLANNING, by Bast, et al.
U.S. Pub. No. 20130317742, published November 28, 2013, entitled SYSTEM AND METHOD FOR ESTIMATING ORIGINS AND DESTINATIONS FROM IDENTIFIED END-POINT TIME-LOCATION STAMPS, by Ulloa Paredes, et al.
U.S. Application Ser. No. 14/737,964, filed June 12, 2015, entitled LEARNING MOBILITY USER CHOICE AND DEMAND MODELS FROM PUBLIC TRANSPORT FARE COLLECTION DATA, by Ulloa Paredes, et al.
U.S. Application Ser. No. 14/450,628, filed August 4, 2014, entitled EFFICIENT ROUTE PLANNING IN PUBLIC TRANSPORTATION NETWORKS, by Ulloa Paredes.

BRIEF DESCRIPTION

In accordance with one aspect of the exemplary embodiment, a method for assisting a user in planning a trip includes receiving a request for a trip from a user. A user profile for the user is accessed, the user profile including user preferences for each of a plurality of transportation modes, user goals, and optionally user constraints on trips. The user preferences each include an inferred user preference value and, where stated, a stated user preference value. The user goals each include an inferred user goal value and, where stated, a stated user goal value. A set of candidate itineraries is built for the trip which each meets the user's constraints. The candidate itineraries each specify a respective set of the plurality of transportation modes. For each of the user preferences, the stated preference value, where stated, and the corresponding inferred preference value are aggregated to generate a weight for the preference. For each of the user goals, the stated goal value, where stated, and the inferred goal value are aggregated to generate a weight for the goal. For each of the candidate itineraries, a cost for each of the goals is computed. For each of the candidate itineraries, the itinerary is ranked based on the preference weights, goal weights, and the computed cost for each of the goals. Information on at least a subset of the ranked itineraries is output for enabling the user to select an itinerary for the trip.

One or more of the steps of the method may be implemented by a processor device.

In accordance with another aspect of the exemplary embodiment, a system for planning a trip includes a profile manager which manages, for each of a plurality of users, a respective user profile. The user profile includes the user's preferences for each of a plurality of transportation modes, user goals, and optionally user constraints on trips. The user preferences each include an inferred user preference value and, where stated, a stated user preference value, and the user goals each including an inferred user goal value and, where stated, a stated user goal value. A trip planner builds a set of candidate itineraries for a trip requested by one of the users, which meet the user's constraints on trips. The candidate itineraries each specify a respective set of the plurality of transportation modes. An aggregation component, for each of the user preferences, aggregates the stated preference value, where stated, and the inferred preference value to generate a weight for the preference and for each of the user goals, aggregates the stated goal value, where stated, and the inferred goal value to generate a weight for the goal. A ranking component ranks the candidate itineraries for each of the candidate itineraries based on the preference weights, goal weights, and a computed cost for each of the goals. A representation generator outputs information on at least a subset of the ranked itineraries for enabling the user to select an itinerary for the trip. A processor implements the profile manager, trip planner, aggregation component, ranking component, and representation generator.

In accordance with another aspect of the exemplary embodiment, a method includes providing for a user to state preference values for each of a plurality of transportation modes and providing for the user to state goal values for each of a plurality of goals to which the transportation modes employed in a trip itinerary contribute differently. Optionally, providing for the user to state a constraint for at least one of the transportation modes. Optionally, providing for the user to state other itinerary impacting constraints (e.g. wheel chair usage) or physical fitness information (e.g. age, weight, walking speed). Generating a user profile for the user, the user profile including user preferences for each of a plurality of transportation modes, user goals, and optionally user constraints, the user preferences each including an inferred user preference value and, where stated, the stated user preference value, and the user goals each including an inferred user goal value and, where stated, the stated user goal value. The inferred user goal values and inferred user preference values are based on prior user behavior. For each of a set of candidate itineraries for a trip, the candidate itinerary is ranked. The ranking includes computing a utility function which takes into account the stated and inferred preferences and stated and inferred goals and coefficients which place a weight on the inferred goals and inferred preferences as a function of a duration since the respective goal or preference was last stated. Information based on the ranking is output.

One or more of the steps of the method may be performed by a processor device.

BRIEF DESCRIPTION OF THE DRAWINGS

FIGURE 1 is a functional block diagram of a trip planning system in accordance with one aspect of the exemplary embodiment;

FIGURE 2 is a flow diagram illustrating a trip planning method in accordance with another aspect of the exemplary embodiment;

FIGURE 3 illustrates a user profile; and

FIGURE 4 illustrates an exemplary method for aggregation of multiple objective functions in an exemplary utility function in the method of FIGURE 2; and

FIGURE 5 summarizes the computation of the utility function in the method of FIGURE 4.

DETAILED DESCRIPTION

Aspects of the exemplary embodiment relate to a system and method that personalizes trip planning for a user based on a set of personal factors that are relevant to the user when organizing trips.

The personalized method takes into account a set of user criteria, such as the user's preferences, goals, and constraints, in connection with a set of trip variables, such as transportation modes, number of transfers, times, and conditions.

Some of the user criteria can be stated by the user. Some of the user criteria may be inferred (learned) by the system based on the user's prior behavior. The system may also provide specific tools for dealing with exceptional situations.

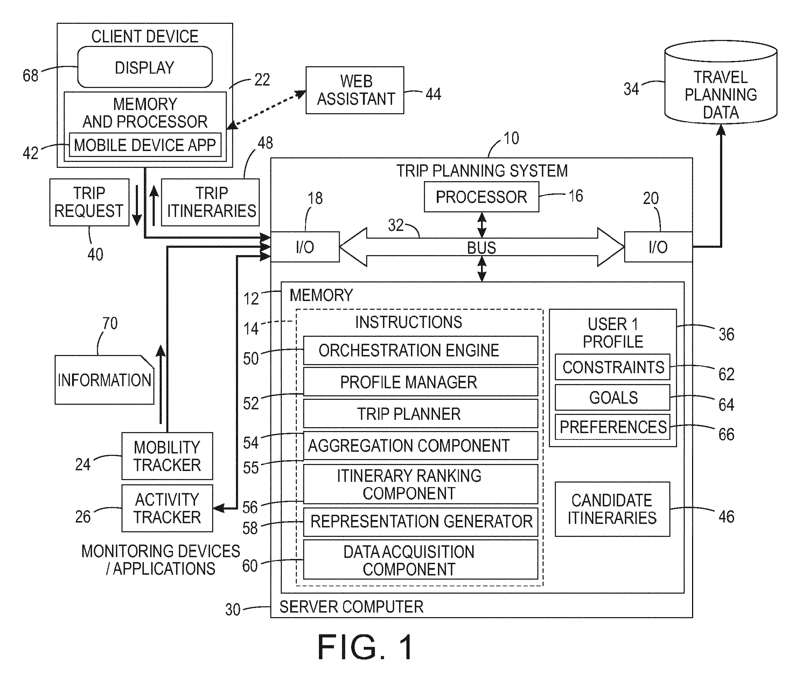

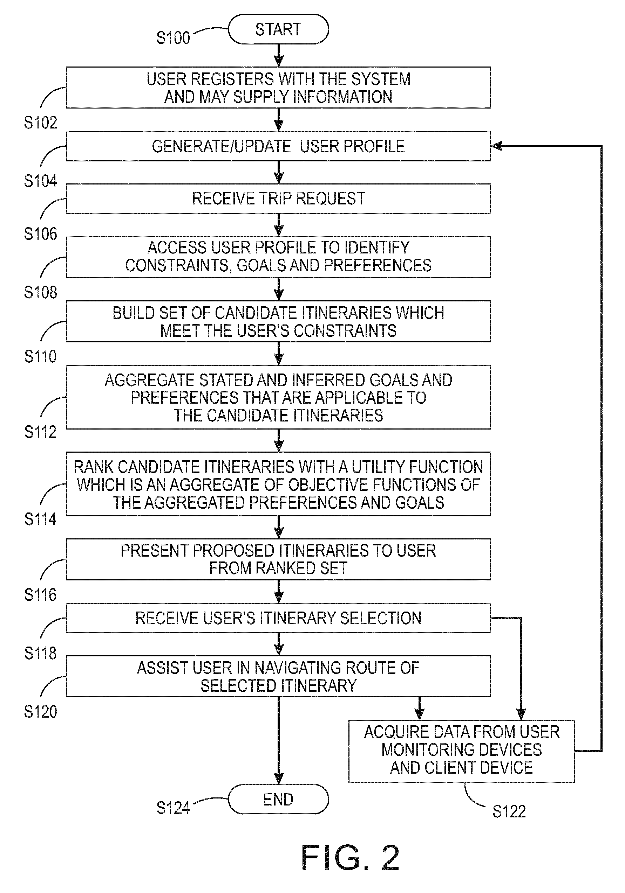

With reference to FIGURE 1, a trip planning system **10** is illustrated in an operating environment. The system **10** includes memory **12** which stores instructions **14** for performing the method illustrated in FIGURE 2 and a processor **16** in communication with the memory for executing the instructions. One or more input/output devices **18, 20** allow the system to communicate with external devices, such as the illustrated client computing device **22** and one or more user monitoring devices **24, 26,** via wired or wireless connections **28,** such as the Internet. The system **10** may be hosted by one or more computing devices, such as the illustrated server computer **30.** Hardware components **12, 16, 18, 20** of the system are communicatively connected by a data/control bus **32.**

The system **10** has access to travel planning data **34,** such as route plans for one or more public transportation services (e.g., bus, tram, train, plane, etc.), time schedules for the public transportation services, maps for planning independent travel routes, such as walking, personal vehicle (e.g., car), and/or bicycle, and the like. The travel planning data **34** may be stored in one or more local and/or remote databases and/or be accessible via one or more websites. The system and method make use of a user profile **36,** which may be stored in local or remote memory. The user profile models information on the particular user's criteria, such as personal preferences, personal goals, and constraints.

The system **10** receives as input a request **40** for planning a trip for a given user, which may specify a departure point D and an arrival point A. The departure point and arrival point may be input in any suitable form, such as geolocation (e.g., in the case of the departure point being the user's current location), address, point on a map, identifier of previously identified location (e.g., "home," "work"), or the like. The request **40** may be generated with a mobile device application **42** or a web assistant **44** hosted by or accessed by the client device **22.** The trip planning system **10** builds a list of one or more candidate itineraries **46** for the trip from D to A, taking into account the user's preferences, goals, and constraints, and may output one or more of the most highly ranked itineraries **48** to the user for review.

The illustrated instructions **14** are described in terms of a set of components **50, 52, 54, 56, 58, 60,** which may be hosted on the same or different computing devices. These components may be in the form of software implemented by hardware, such as processor device **16.** The components include an orchestration engine **50,** which oversees activities of the other components **52, 54, 56, 58, 60.**

A profile manager **52** maintains (generates and updates) a user profile 36 for each user of the system and accesses the current user profile **36** to extract information for planning the requested trip **40.**

A trip planner **54** receives, as input, constraint information **62** which has been extracted from the user profile **36** and, given the departure point and arrival point, accesses the travel planning data **34** and computes a set of candidate itineraries **46** and their corresponding transportation modes, taking into account the constraints **62** for the user, for completing the trip between the specified departure and arrival points. Each candidate itinerary includes a sequence of segments to be followed in a predefined order, each segment being associated with a respective transportation mode to be used for that segment (as well as information on the particular vehicle which is being used, if appropriate, such as "bus 21 from Y to Y" or the 8.15 train from X to Y) and a predicted duration of the segment.

The trip planner **54** can be configured similarly to that described in above-mentioned U.S. App. Ser. No. 14/450,628. See, also, F. Roulland, et al, "Learning mobility user choice and demand models from public transport fare collection data," Intelligent Transport Systems, 21st World Congress, April 08, 2015. As will be appreciated, the trip planner **54** may have a set of internal constraints and criteria that are used in identifying candidate itineraries, such as "no itinerary may be more than X times the time of the shortest", "no itinerary may have more than Y transfers", "walking/biking times in excess of Z minutes are excluded", and so forth, which may be a function of the averages for travelers in that area. The trip planner may also be configured to identify candidate itineraries using a range of different transportation modes so that user preferences and goals can be more readily accommodated. For example, the trip planner may provide candidate itineraries which include, amongst them, at least two or at least three or at least four different transportation modes. At least one or more of the itineraries may use a different combination and/or sequence of transportation modes from one or more or all other candidate itineraries. At least one or more of the itineraries may make use of at least two or at least three different transportation modes. At least three or at least four or at least five or at least ten candidate itineraries may thus be generated for the trip (assuming that the trip planner is able to identify that number).

An aggregation component **55** aggregates for each goal and preference relevant to the candidate itineraries, the user's stated and inferred values for the respective goal or preference to generate a respective preference weight or goal weight.

A ranking component **56** ranks the candidate itineraries **46,** based on the computed weights for the user's goals **64** and preferences **66** and computed costs for the goals and contributions for the preferences.

A representation generator **58** generates information **48** on the top ranked itineraries, e.g., in the form of a representation of a set of one, two or more top-ranked itineraries which the user can scroll through or otherwise peruse. The information **48** is sent to the client device for presentation to the user, e.g., by display on an associated display device **68** and/or audibly via a speaker device. A data acquisition component **60** collects information **70** from monitoring devices **24** and **26** and from client device **22** and uses the information to generate or update inferred preferences and goals for the user profile **36.**

The computer system **10** may include one or more computing devices 30, such as a PC, such as a desktop, a laptop, palmtop computer, portable digital assistant (PDA), server computer, cellular telephone, tablet computer, pager, combination thereof, or other computing device capable of executing instructions for performing the exemplary method.

The memory **12** may represent any type of non-transitory computer readable medium such as random access memory (RAM), read only memory (ROM), magnetic disk or tape, optical disk, flash memory, or holographic memory. In one embodiment, the memory **12** comprises a combination of random access memory and read only memory. In some embodiments, the processor **16** and memory **12** may be combined in a single chip. Memory **12** stores instructions for performing the exemplary method as well as the processed data **36, 46.**

The network interface **18, 20** allows the computer to communicate with other devices via a computer network, such as a local area network (LAN) or wide area network (WAN), or the internet, and may comprise a modulator/demodulator (MODEM) a router, a cable, and/or Ethernet port.

The digital processor device **16** can be variously embodied, such as by a single-core processor, a dual-core processor (or more generally by a multiple-core processor), a digital processor and cooperating math coprocessor, a digital controller, or the like. The digital processor **16,** in addition to executing instructions **14** may also control the operation of the computer **30.**

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

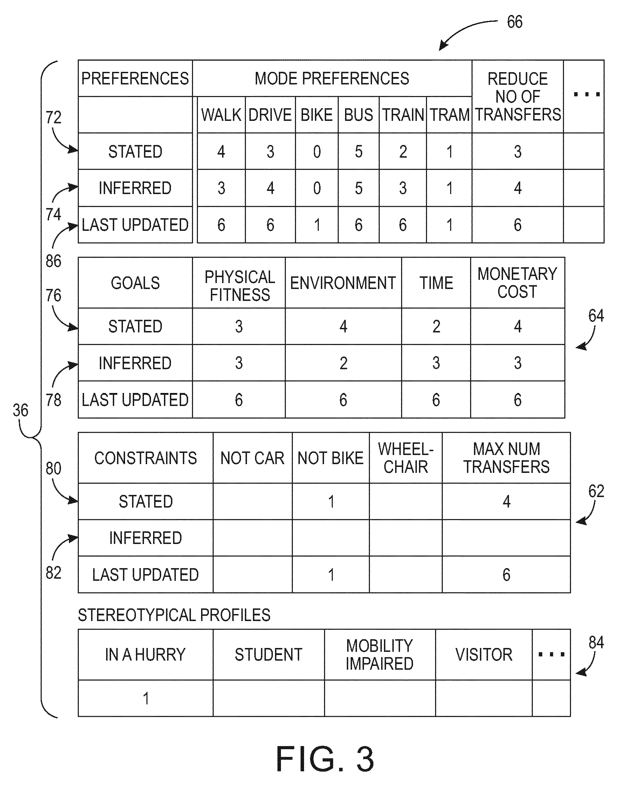

As illustrated in FIGURE 3, the user profile **36** may include some or all of the following information:

1. Preference information **66:** the user's preferences in relation to the use of the different potential transportation modes and the number of transfers. Transportation modes considered may include some or all of: walking, driving (e.g., by user's personal vehicle), tram, bicycle, train, plane, and boat, for example, depending on the modes available in the location. The transportation modes may include at least one public transportation mode (e.g., bus tram, or train) and at least one personal transportation mode (e.g., car, bicycle, walk). One or more of the transportation modes may be powered by a motor which directly or indirectly results in pollution $CO_2$ production, such as a diesel or electric powered bus, while one or more modes of transport may be human powered, such as walk and bicycle. Some of the modes of transport may be associated with a higher monetary cost than others, for example, the bus may be cheaper than the train, although this may also be a function of the ticket price for particular trips.

Preferences for the modes may be stated by the user (stated preferences **72)** and/or inferred by the system (inferred preferences **74).** The inferred preferences **74** may be computed by the system based solely on information other than that collected from the user for the stated preferences **72.** In some embodiments, the stated preferences may be stated by the user using numerical or other ratings, e.g., using numbers in a given numerical range (such as a 0-5 rating with 5 being the most preferred and 0 the least preferred). In other embodiments, the user may provide textual preferences, such as "I like using the tram", or "I really don't like using the bus," which are processed by the system to identify corresponding numerical ratings for the stated preferences. The inferred preferences **74** reflect the choices made by the user and are derived from the user's prior actions. These may include the transportation modes selected by the user for prior trips planned by the system and/or the tracked paths inferred from data collected from the monitoring devices **24, 26.** Stated and inferred preferences can thus be represented on the same scale, e.g., as numbers between 0 ("Absolutely don't want to do this") and 5 ("Like very much doing this"). A combination of stated and inferred preference values can be employed in order to present the most accurate list of candidate itineraries **46.** For instance, if the user declares that she does not want to use buses, itineraries involving buses could be excluded from the list of possible options **46.** However, the user may not like using the bus but still accept using it. Thus, bus options may appear among the candidate itineraries but are more likely to be lower ranked than other itineraries.

2. Goals **64:** these may include the stated and inferred goals (objectives) **76, 78** that the user may have, such as some or all of: increasing physical activity/fitness, e.g., over a given period of time, reducing environmental impact, saving time, and saving money. For the stated goals **76,** a number of possible goals may be offered to the user and each goal may be modeled as a number in a given numerical range, e.g., between 0 and 5, where 0 indicates that the user has not defined the importance of the goal, 1 means that this goal is not important, and 5 means that the goal is very important to the user. Inferred goals **78** are based on a prediction of the user's goals by the profile manager **52.** For example, the user may declare that she wants to reduce her environmental impact (e.g., by reducing $CO_2$ emitted as a function of her trips), which is given a high ranking in her stated goals **76.** However, information acquired by the system, e.g., from the mobility tracker **24,** may suggest that she frequently chooses to travel by car. In such a case, the profile manager **52** may infer that the user places a higher priority on saving time than on reducing her environmental impact. This is then reflected in her inferred goals **78.**

3. Constraints **62:** these include the user's constraints that have an impact on the identification of candidate itineraries **46.** Example constraints may include the user makes use of a wheelchair, the user lacks a driver license, or the user cannot climb stairs, or the user will walk no more than X meters, or a combination thereof. Constraints can be expressed as Boolean values, e.g., a 0 when the constraint is not present, a 1 when it is. In some embodiments, only stated constraints **80** are used. In other embodiments, inferred constraints **82** may also be generated.

The system and method are thus able to take into account the general preferences **66** of the user, which can be explicitly stated by the user and/or learnt over time by the system, and the willingness of the user to change behavior, by defining a personal goal **76** or changing the preferences.

Regarding the user's stated preferences **72,** users may have different attitudes with respect to the elicitation of the preferences. Some users may not be willing to explicitly declare their preferences. Others may be willing to express some of the preferences if, for example, they see an advantage to doing so, such as an improvement in the quality of the service. Still others may be willing to completely, even if gradually, define the stated elements of their profile. To address the different user attitudes, the user may be offered different profile selection mechanisms, such as: (1) not defining their profile at all; (2) choosing from among a set of stereotypes **84,** which each correspond to a predefined profile that may then be tuned, if the user wishes to do so; and (3) defining their profile with the possibility of doing this incrementally and dynamically. The system will then use the stated preferences, if any, and modify them when there is a change in their definition.

The stereotypical profiles **84** can be predefined profiles corresponding to often observed situations, such as the user is in a hurry, is a student, is mobility or visually impaired, is a visitor, or the like. Predefined preferences and goals are associated with each stereotype and the itinerary ranking component **56** can rely on these predefined parameters for sorting the candidate itineraries in the same manner as for stated preferences and goals. A stereotypical profile **84** can be used as either a starting point for defining a user's profile or as an exceptional profile corresponding to the need for a specific trip, for example, when an unexpected event induces significant changes in the user's current preferences and goals, but the user plans to revert to the stated preferences and goals in the future. For example, the user may be in a hurry one day and therefore not wish to follow the predefined physical fitness goal that day.

Each stereotype profile **84** is a set of predefined preferences and goals, and the set of profiles and/or individual stereotypical profiles can be adapted to the collective needs of the users of the system. Some of the stereotypes may generally correspond to the set of possible goals, e.g.:

1. *I want to save money:* the sole goal of the user is to save money (reduce as much as possible the cost of the trips). Other stated goals are unused, preferences are given default values.

2. *I want to save time:* the sole goal of the user is to save time (reduce as much as possible the trip duration). Other stated goals are unused, preferences are given default values.

3. *I want to increase my physical activity:* the sole goal of the user is to increase his or her physical activity during the trips (e.g., by using a bicycle or walking. Other stated goals are unused, preferences are given default values (or only implemented under certain conditions, for example when distances and/or itinerary times are above thresholds);

4. *I want to reduce my eco-impact:* the sole goal of the user is to reduce her eco-impact by using a subset of the transportation modes that have lower environmental impact than others when feasible. Other stated goals are unused, preferences are given default values.

Stereotypes corresponding to common situations may also be defined:

1. *I'm in a hurry:* the user intends to travel as fast as possible. This is translated into all stated preferences and goals being unused, except the goal "save time" which is considered very important; all inferred goals may be set to 1.

2. *I'm a student:* the user is considered as having limited resources but willing to stay physically active. This is translated into two stated goals: "save money" (e.g., valued as "very important") and "increase physical activity" (e.g., valued at "important", because it may be considered slightly less important than saving money). Preferences are unused, inferred goals may be set to 1.

3. *I'm mobility impaired:* in this case, all stated goals and preferences may be unused, as well as inferred preferences. Inferred goals may be set to 1 and the system is configured for taking into account the constraint, e.g., "using wheelchair" and transmitting it in its requests to the trip planner **54.**

FIGURE 2 illustrates an exemplary computer-implemented method which can be performed with the system of FIGURE 1. The method begins at S100.

At S102, the user may register with the system. The system provides for the user to state preference values **72** (directly or indirectly) for each of a plurality of transportation modes and provides for the user to state goal values **76** (directly or indirectly) for each of a plurality of goals to which the transportation modes employed in a given trip itinerary may contribute differently. The user then provides information which may be used to instantiate his or her profile with stated preferences **72** (e.g., with respect to one or more of the set of transportation modes), stated goals **76,** and optionally constraints **80** which limit the transportation modes which can be used in a candidate itinerary. The user may grant access to the user's personal monitoring devices **24, 26,** and/or provide other information used in ranking candidate itineraries, such as weight, age, etc.

At S104, a profile **36** is generated for the user by the profile manager 52, based on the provided information. The user profile **36** includes values for the inferred preferences and, where preferences have been stated by the user, a stated value for each of the preferences. The user profile **36** also includes values for the inferred goals and, where goals have been stated by the user, a stated value for each of the goals.

At S106, a trip request **40** is received from the registered user for planning a trip with a departure point D and an arrival point A.

At S108, constraints **62** are extracted from the user profile **36.** In particular, the orchestration engine **50** calls the profile manager **52** for extracting the constraints **62** from the user's profile. Constraints can be explicit requests, e.g., the need for a wheelchair, or preferences concerning possible transportation modes when they are set to 0. For example, if car driving is set to 0, this means that the user does not want to use a car as a transportation mode. This preference is then converted to a constraint.

At S110, a list of candidate itineraries **46** from D to A is built. In particular, the orchestration engine **50** calls the trip planner **54,** which builds a set of at least one (generally, at least two) candidate itineraries **46** between the two points, taking into account the user's constraints **62.** The retrieved set of candidate itineraries for the trip which meet the user's constraints each specifies a respective set of the transportation modes.

At S112, the stated and inferred goals **76, 78** and preferences **72, 74** are aggregated. For example, the orchestration engine **50** calls the profile manager **52** for aggregating the stated and inferred goals **76, 78** for each goal and the stated and inferred preferences **72, 74** for each preference, e.g., using a weighting function which may incorporate a stated goal/preference coefficient (a forgetting factor) which takes into account the time **86** which has elapsed since that stated goal/preference was last set.

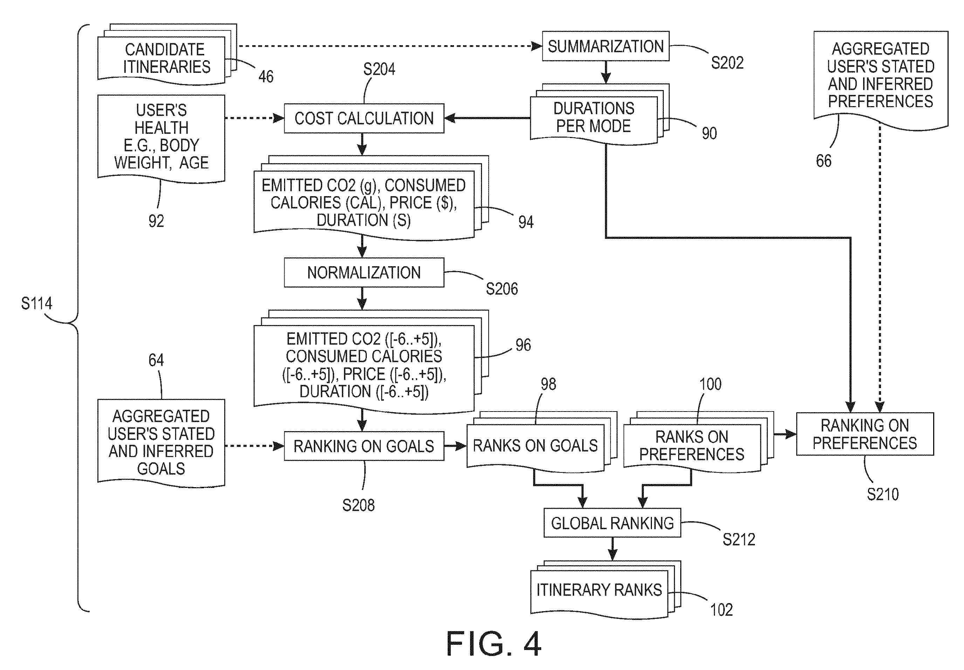

At S114, the candidate itineraries **46** are ranked based on the user profile **36,** in particular, to optimize a function of the user's aggregated goals and preferences output at S112. For example, the orchestration engine **50** calls the ranking component **56,** which ranks the set of candidate itineraries **46** suggested by the trip planner **54** according to the user's goals and preferences, as outlined in further detail below with respect to FIGURE 4.

At S116, at least a subset **48** of the candidate itineraries is presented to the user as proposed itineraries. The system may also generate a representation of each trip itinerary in terms of how well it promotes the user's goals.

At S118, the user makes a selection of one of the proposed itineraries, which is received by the system. The selection is recorded by the profile manager **52** in memory for later computing of inferred goals and preferences **78, 74.**

At S120, the system **10** optionally assists the user by providing navigation instructions for the selected itinerary. See, for example, Rehrl, K.; et al., "Assisting Multimodal Travelers: Design and Prototypical Implementation of a Personal Travel Companion", Intelligent Transportation Systems, IEEE Trans. on Intelligent Transportation Systems, vol. 8, no. 1, pp. 31-42 (2007), in which the navigation instructions are designed to facilitate transfers.

At S122, the data acquisition component **60** optionally acquires data logged about the user's actual movements. This data collection can be made either by third party applications (e.g., a mobility tracker application **24** on the user's smartphone, which can automatically detect the transportation modes used by the user, e.g. based on speed, acceleration, and the like) or by dedicated devices (e.g., an activity tracker **26** such as a pedometer that the user carries with her). These data sources infer and collect data such as the likely transportation modes used (which may be refined based on the user's selected itinerary), the geolocation of the user, the number of steps that the user walked each day, and the like.

The method returns to S104, where the profile manager **52,** using the recorded data acquired by the data acquisition component and the selected itinerary information, infers information related to the user's preferences and goals and updates the inferred preferences/goals **74, 78,** as appropriate. For example, when the user selects an itinerary involving the use of a bicycle for the trip, the profile manager **52** can use the detected transportation modes for identifying if the user actually used a bicycle. If the user is deduced to have done so, this strengthens or maintains the inferred preference for the bicycle and, if not, it weakens this inferred preference. A forgetting factor may be used in updating the inferred preferences and goals to place more emphasis on recently acquired information than on less recently acquired information.

The system may then wait for a new trip request from the user (S106) and proceed as before.

The method ends at S126.

Further details of the system and method will now be described.

Aggregating Goals and Preference Values (S112)

The stated and inferred values of a preference or a goal are combined, e.g., in a weighted combination, for defining a global value. The weights (coefficients) accorded to the inferred preferences/goals may increase with time on the assumption that more recently stated preferences/goals are more accurate than the corresponding values stated in the past. For example, the aggregated value $c_v$ for a given criterion c (e.g., a preference or goal), e.g., to use the bus, may be aggregated as a function of the stated value $c_{stated}$ and the inferred value $c_{inferred}$ such as:

$$c_v = \frac{c_{stated}*w_{stated}+c_{inferred}*w_{inferred}}{w_{stated}+w_{inferred}} \tag{1},$$

or a function thereof, where the coefficient $w_{inferred}$ for the inferred goal/preference may be a non-zero increasing function of the elapsed time since the value of the criterion (e.g., preference) was last stated (e.g., $w_{inferred}$ may be a value which increases from a minimum to a maximum value (e.g., from 1 to 12 or from 0.5-6) over 12 months, putting greater weight on the inferred preference as time goes by), and the coefficient for the stated goal/preference $w_{stated}$ may be a decreasing function of the elapsed time. Thus, when the user modifies one or more of his or her stated preferences, the weight of the corresponding inferred preference is reset to its minimum value (e.g., 1). The weight of an inferred goal is also reset to its minimum value (e.g., 1) when the user states one or more of his or her goals. This mechanism reflects the fact that the user may have information that the system does not have (yet) (e.g., the user may know that her car has broken down or that she wants to engage in more physical activity from now on).

The aggregated goals and preferences (at least for the transportation modes that are used in the candidate itineraries) are output by the aggregation component **55** to the ranking component **56.**

Ranking of Candidate itineraries (S114)

Various methods are contemplated for ranking the set of candidate itineraries **62** based on the set of the user's preferences and goals.

In one embodiment, for each candidate itinerary, a score is computed as an aggregate of a ranking of each of the criteria (preferences and goals). The score of each criterion can be a function, e.g., a product, of the criterion's aggregated value (computed at S112) and a measure of the criterion's contribution to the candidate itinerary, e.g., measured in terms of time. For example, the score $S_{itinerary}$ for an itinerary is computed as a function of a sum for all the n criteria, of the criterion's aggregated value $c_v$ (computed according to Eqn. 1), the unit cost $cost_c$ of the criterion (in the case of goals) and/or the contribution $t_c$ of that criterion to the candidate itinerary (e.g., measured in terms of time).

$$S_{itinerary} = \sum_1^n (c_v * cost_c * t_c) \tag{2},$$

or a function thereof.

The candidate itineraries can then be ranked based on their scores, e.g., the one with the highest score is ranked first, and so forth.

Such an objective function as shown in Eqn. 2 may be difficult to use in practice as the criteria may be measured using different scales. For example, for the goal of reducing environmental impact, the cost may be expressed in terms of carbon monoxide generated while for the fitness goal, it may be expressed as a function of calories consumed. There is thus no certainty that all parameters are comparable to each other (e.g., consider comparing and aggregating the physical activity and the pollution induced by a trip). In such a case, several objective functions may be employed, making it possible to create series of assessors on each considered criterion: a candidate itinerary is then evaluated as a set of indexes, of the form *f(s) = {Y1(s), Y2n(s), ..., Yn(s)}*, where s is a candidate itinerary and *Yi(s)* is the result of the *ith* objective function assessing s on the *ith* criterion. The global ranking produces an aggregated rank p.

The comparison of several candidate itineraries can then be performed using various approaches, such as:

  1. aggregation of the multiple objective functions in a single function (e.g., a weighted average) defining a complete preference order;

2. progressive definition of preference together with exploration of the feasible set;

3. definition of a partial order stronger than the product of the n complete orders associated with the n objective functions;

4. maximum reduction of uncertainty and incomparability.

See, for example, Roy, B. "Problems and methods with multiple objective functions," Mathematical Programming, 1(1): 239-266 (1971).

In the ranking method illustrated in FIGURE 4, a progressive method of refining the ranking is used to compute a utility function as an aggregation of multiple objective functions. It is applied to the set of candidate itineraries that are returned, by the trip planner, as an answer to a request of defining a trip from a departure point to an arrival point.

In particular the method computes the utility function by aggregating a first objective function that is a function of, for each of the goals, the aggregated goal weight and a respective computed (normalized) cost of the candidate itinerary, for that goal, and a second objective function that is a function of, for each of the preferences, the aggregated preference weight and a respective computed contribution for that preference, to the candidate itinerary. In the case of preferences for transportation modes, each contribution may be computed as a function of the total duration, in the itinerary, of travel by the respective transportation mode.

The following trip to go from the requester's home to her workplace will be used as an illustrative example:

A. Start from home at 7:15 AM

B. Walk to the parking place where the car is located, arrive at 7:25 AM

C. Drive to train station, arrive and park car at 7:40 AM

D. Take the train, arrive downtown at 7:50 AM

E. Take the tram at 7:52 AM, arrive at the destination station at 8:00 AM

F. Walk to the workplace, arrive at 8:07 AM.

This trip from home to the workplace in the example is a combination of the following transportation modes (in the order of the sequence): walk, car, train, tram, and walk.

As illustrated in FIGURE 4, briefly, the ranking process may include summarization of candidate itineraries (S202), cost calculation for goals (S204), cost normalization (S206), ranking on goals (S208), ranking on preferences (S210), which may take place before, during, or after the ranking on goals, and global ranking, based on the ranking on preferences and ranking on goals (S212).

Summarization

At S202, each candidate itinerary from the candidate set **46** provided by the trip planner is summarized. In particular, the ranking component computes the duration/distance of each transportation mode involved in the itinerary and its total duration, and total time of the trip, and optionally the total number of transfers. This mode duration information **90** is stored. Using the example itinerary, the information **90** may include:

Walking: 18 min, 1.2 km;

Driving: 15 min, 11 km;

Taking train: 10 min, 21 km;

Taking tramway: 8 min, 1.7 km;

Total itinerary duration: 52 min.

Cost calculation

At S204, a cost **94** that is induced by each of the transportation modes considered in each of the candidate itineraries is computed for each goal. The cost computation may depend on the distance, the duration, and the transportation mode. For each transportation mode, a specific formula may be defined for each goal. For example:

1. Calories consumed when walking = walked distance * user body weight (kg) * energy factor. The user body weight may be extracted from a user health record **92,** or be an average over a population. The energy factor depends on the walking speed. See, for example, Didier, J.-P., et al., "Energy cost and cardiorespiratory responses while walking in two groups of young and elderly people", Annales de Réadaptation et de Médecine Physique, Vol. 38, Issue 8, pp 475-480 (1995). For example, when walking at 0.8 m/s, the factor is equal to 1.042 kCal/kg/km. The walking speed may be derived from the activity tracker **26** during prior trips or more general walking by the user, may be computed based on the user's age stored in the health record **92,** or be an average value, or take into account a combination of these factors.

2. Calories consumed when driving may be assumed to be approximatively 50 KCal per hour on top of the amount naturally burned each hour (e.g., a baseline of 80 kCal per hour), or computed based on the user's body weight. Such information may be obtained from a knowledge base or information available online. See, for example, https://www.exercise.com/activity/driving-car.

3. As sitting on a chair consumes no extra calories above the baseline, the calories consumed when being transported by tram, subway, or train is considered equal to 0.

4. Emitted $CO_2$ depends on the kind of carburant. For example, diesel fuel emits 2.6 kg $CO_2$ per consumed liter, liquefied petroleum gas (LPG) emits 1.66 kg, and super-unleaded petrol emits 2.28 kg $CO_2$. Such information may be obtained from a knowledge base or information available online. See, for example, http://www.ecoscore.be/en/how-calculate-co2-emission-level-fuel-consumption. The type of carburant may be assumed from the mode of transport used in the transportation system, or based on user-supplied information (e.g., the type of vehicle driven by the user, the grade of fuel used, the average gas mileage obtained, or the like).

4. Regional trains may be assumed to produce a standard value, e.g., 30.7 g of $CO_2$ per passenger per kilometer, on average (SNCF).

5. Monetary costs for public transportation may be obtained from the travel planning data **34.** In the case of user-provided transport, such as car or bicycle, a fixed monetary cost per unit distance (which may depend on the vehicle's characteristics) may be assumed for each mode, and any fixed costs, such as parking fees/tolls, etc. that the user is likely to incur may also be considered.

As noted above, some of the costs may depend on the user's body weight and walk speed, others on the user's vehicle characteristics. As will be appreciated, approximations may be made to ease computation. In some cases, where the user has obtained a season pass for a transport mode or route (such as a tram pass), the cost for using that transportation mode or route may be considered as 0 or close to 0. Example results for the considered example are shown in TABLE 1.

TABLE 1: Costs Computed for the illustrative example of itinerary

| MODE | CO$_2$ OUTPUT | MONETARY COST | DURATION | CONSUMED CALORIES |
|---|---|---|---|---|
| Walking | 0 g. | $0.00 | 18 min | 95 kCal |
| Driving | 3582 g. | $2.09 | 15 min | 12 kCal |
| Train | 645 g. | $1.20 | 10 min | 0 kCal |
| Tram | 5.5 g. | $0.00 | 8 min | 0 kCal |
| Total for itinerary | 4232.5 g. | $3.29 | 52 min | 107 kCal |

Normalization

At S206, the computed costs **94** for each of the goals are normalized to produce normalized costs **96** over a common range of values. This facilitates aggregation of the various costs and making them more comparable. The normalization may produce a value within a fixed range, the range being the same for each cost type. For example, normalization may produce a number between -5 (very bad) and +5 (very good) and optionally an additional value of -6 corresponding to a penalty when the cost is considered as unacceptable. The normalization may include a non-linear transform (e.g., an exponential function) or linear transform (e.g., a piece-wise linear function) of the costs onto the fixed range for comparing the costs of one itinerary to the costs of all the itineraries in the set of candidate itineraries.

For example, the itinerary of the example lasts 52 minutes. The best value for the duration is 32 minutes, by using only the car. The worst value for the duration is 67 minutes obtained by replacing the tram portion by walking. The average duration over the candidate set is 44 minutes. A reference value, which can be the average duration of commuting for people living in the same area and/or working nearby the user (57 minutes) may be used as a point. This provides four points of respectively 32, 44, 57, and 67 minutes, which can then be projected onto the range of normalized costs.

One example formula for computing the resulting normalized cost 96 is presented in TABLE 2. The aim is to associate a value to each of the reference points (the best one is scored +5, the second best is scored 0, the second worst is scored -5 and the worst is scored -6). Each line segment between two of these reference points can be used to compute normalized costs for intermediate values as the ordinate corresponding to the cost considered as an abscissa. The classical mathematical function $y = ax + b$ is used for identifying y, which is the normalized cost of an un-normalized cost equal to x.

TABLE 2: Objective function for ranking based on the duration of the illustrative example itinerary

| DURATION | NORMALIZED COST |
|---|---|
| duration $\leq$ 32 | +5 |
| 32 < duration < 44 | Normalized cost = a * duration + b<br>Where $\quad$ a = (0 - 5) / (44 - 32) $\approx$ -0.42<br>$\quad$ b = 5 - 32a $\approx$ 18.3 |
| duration = 44 | 0 |
| 44 < duration < 57 | Normalized cost = a * duration + b<br>Where $\quad$ a = (-5 - 0) / (57 - 44) $\approx$ -0.38<br>$\quad$ b = 0 - 44a $\approx$ 16.9 |
| duration = 57 | -5 |
| 57 < duration < 67 | Normalized cost = a * duration + b<br>Where $\quad$ a = (-6 - -5) / (67 - 57) $\approx$ -0.1<br>$\quad$ b = -5 - 57a $\approx$ 0.7 |
| duration $\geq$ 67 | -6 |

The example itinerary lasting 52 minutes is ranked -3.08 on duration. The same kind of computation can be applied for $CO_2$, monetary cost, and consumed calories. All candidate itineraries are ranked in the same way, giving normalized costs as illustrated in TABLE 3 for the example itinerary and two alternative candidate itineraries.

TABLE 3: Normalized costs for candidate itineraries

|  | CO2 | MONETARY COST | DURATION | CONSUMED CALORIES |
|---|---|---|---|---|
| Example itinerary | -1.28 | +3.53 | -3.08 | -2.67 |
| Alternative #1 | +5 | +5 | -6 | +5 |
| Alternative #2 | -5 | -5 | +5 | -6 |

As will be appreciated other methods of converting costs expressed in different units to a normalized common range may be used.

Ranking on goals

In S208, the normalized costs are aggregated according to the user's goals. Goals might be undefined (this is implemented as a 0) or be defined with values between 1 ("not an important objective to me") and 5 ("a very important objective for me"). As noted above, the system may consider stated and/or inferred goals. For example, the user declares that he wants to reduce his environmental impact (goal "reduce eco-impact": +5) even if it takes more time (goal "save time": +2). However, if the system identifies that he always chooses the quickest itinerary, the system then may infer that his main objective is to save time (inferred goal "save time": +5) and seems to pay attention to CO2 only when two itineraries require the same time (inferred goal "reduce eco-impact": +2).
Moreover, goals may have a deadline ("I want to increase my physical activity before March the 30th"). In such a case, the goal is no longer taken into account after the deadline (its value is reset to 0). Before the deadline, it is included in the calculation. In one embodiment, the importance of the goal may be considered as increasing when the deadline comes closer. This functionality could be implemented by modifying the inferred value of the goal linearly between the date when it was set and the deadline. For example, if the user says on January 1st that she wants to increase her physical activity before March 30th, and indicates this goal has a stated value of 3, the system could consider that the goal has a linearly increasing value starting with 3 on January 1st and increasing to 5 on March 30th.
For ranking itineraries on goals, the values for the stated and inferred goals **76, 78** are first aggregated at S112. The way the data are aggregated may depend on the estimated validity of the values. For instance, if the user stated his goals recently, the stated values are the most valid ones. But if the declaration has been made a long time ago and if there is relevant history since this declaration, the inferred goals, calculated from this history, are likely to be more valid than the declaration. The result is a weighted average, where the weights (coefficients) depend on the validity.

As an example, goal coefficients may be defined on a yearly basis. For example each coefficient has value between minimum and maximum values, such as from 1 to 12. For example, the coefficient of stated goals is 12 when they just have been stated and linearly decreases over one year with the number of months since the declaration. After six months, their coefficient is 6. On the other hand, the coefficient of each of the inferred goals is 1 when a goal declaration has just been made and then linearly increases during one year to a maximum value (a reset is made when stated goals are modified).

The aggregate goal value can then be computed as:

$$(Stated\ goal\ \times \frac{wt\ of\ stated\ goal}{maximum\ wt}) + (Inferred\ goal\ \times \frac{wt\ of\ inferred\ goal}{maximum\ wt})$$

which may be rounded up to the nearest integer.

TABLE 4 shows example computation of aggregated goal values (S112) to be used in the ranking process, as a function of stated and inferred goals.

TABLE 4: Example of stated and inferred goals with the resulting aggregated goal weights to be used in itineraries ranking

|  | REDUCE ECO-IMPACT | SAVE MONEY | SAVE TIME | INCREASE PHYSICAL ACTIVITY |
|---|---|---|---|---|
| Stated goal | +5 | 0 | +2 | 0 |
| Coefficient of stated goal | 8 | 8 | 8 | 8 |
| Inferred goal | +2 | +1 | +5 | +1 |
| Coefficient of inferred goal | 4 | 4 | 4 | 4 |
| Aggregated goal weight | 4 | 1 | 3 | 1 |

The ranking of an itinerary on a given goal is based on the normalized cost of the itinerary for this goal. For example, the ranking of an itinerary on the goal "saving time" is based on the normalized duration of the itinerary, whose value is greater than -6 (the value for the duration that is considered as being very bad) and lower than +5 (the value for the duration that is considered as being very good).

The ranking on goals **98** for each candidate itinerary can be computed by using Equation 3 (goals taken into account here are those with an aggregated value of greater than 0):

$$ItineraryRankOnGoals = \frac{\sum_{goals} normalizedCost(goal)*goal\ weight}{\sum_{goals} goal\ weight} \qquad (3)$$

where: goals is the set of goals defined for the application;
goal *weight* corresponds to a value between 1 and 5 (e.g., save money = 2), which is the aggregation of the stated and inferred values; and
*normalizedCost(goal)* is the normalized cost **96** of the parameter(s) corresponding to the goal (e.g., for the goal of saving money, the normalized monetary cost = +3.53).

For example, the rank of the itinerary on goals in the example could then be:

$$\frac{(ecocost * eco\ wt) + (moncost * mon\ wt) + (durcost * dur\ wt) + (fit\ cost * fit\ weight)}{eco\ wt + mon\ wt + dur\ wt + fit\ weight}$$

$$= \frac{(-1.28 * 4 + 3.53 * 1 + -3.08 * 3 + -2.67 * 1)}{(4 + 1 + 3 + 1)} = -1.5$$

where *ecocost* is the normalized cost for the environmental goal (reducing CO2), and *eco wt* is the aggregated weight of this goal,
*moncost* is the normalized cost for the saving money goal (reducing monetary cost), and *mon wt* is the aggregated weight of this goal,
*durcost* is the normalized cost for the duration goal (saving time), and *dur wt* is the aggregated weight of this goal,
*fitcost the* normalized cost for the fitness goal (increasing calorie consumption), and *fit wt* is the aggregated weight of this goal.

TABLE 5 shows the ranks on goals computed according to Eqn. 3 for three candidate itineraries, where the first row corresponds to the illustrative example used above, the second row shows values for Alternative #1 that corresponds to an itinerary using the bicycle, and the third row shows values for Alternative #2 that corresponds to an itinerary using the car.

TABLE 5: Example of ranking with goals (as defined in Table 4)

| MODE | NORMALIZED $CO_2$ COST | NORMALIZED MONETARY COST | NORMALIZED DURATION COST | NORMALIZED CALORIES COST | RANK WITH GOALS |
|---|---|---|---|---|---|
| Example itinerary | -1.28 | +3.53 | -3.08 | -2.67 | -1.5 |
| Alternative #1 | +5 | +5 | -6 | +5 | -0.080 |
| Alternative #2 | -5 | -5 | +5 | -6 | -2.596 |

Ranking on preferences

As discussed above, several preferences can be defined. Each of them can be treated in the same way, except for the preference on walking. It is assumed that every itinerary includes at least some walking, for example, for going from the starting point of the trip, that is, the departure point, to the closest station or to the car's parking place. If the user states that he wants to avoid walking, only itinerary stages excluding the first and last ones are considered to be influenced by this preference.

As for the goals, the preferences can be stated and inferred. The same algorithm of coefficients evolving over time defined for the goals can be used for the preference aggregation at S112. TABLE 6 shows an example of stated and inferred preferences aggregation, where stated preferences have a coefficient of 10 and inferred preferences have a coefficient of 2.

TABLE 6: Aggregating Preference Values

| | PREFERENCE WALKING | PREFERENCE DRIVING | PREFERENCE TRAMWAY | PREFERENCE BICYCLE | PREFERENCE TRAIN |
|---|---|---|---|---|---|
| Stated value | 5 | undefined | 4 | 5 | 4 |
| Inferred value | 1 | 4 | 1 | 2 | 5 |
| Agg. preference weight | 4.33 | 4.00 | 3.50 | 4.50 | 4.17 |

The calculation of the ranking **100** of an itinerary's stage on mode preferences can be computed with a second objective function according to Eqn. (4):

$$ItineraryRankOnPrefs = \frac{\Sigma_{modes}\left(\begin{array}{c} if\ p_{mode}=0\ then\ -\infty, otherwise \\ \left(1 - \frac{maxD(mode)-d(mode)}{maxD(mode)}\right) * p_{mode}\end{array}\right)}{number\ of\ modes} \qquad (4)$$

where:

modes is the set of transportation modes involved in the itinerary;

pmode is the preference for the mode of the stage, i.e., the weighted aggregate of stated and inferred preferences computed according to Eqn. 1:

$$pmode = \frac{(pStatedmode * wStatedPref + pInferredmode * wInferredPref)}{(wStatedPref + wInferredPref)} \ ;$$

maxD(mode) is the maximum duration of a mode over the set of itineraries;

d(mode) is the total duration of the mode; and

number of modes is the number of transportation modes that are involved in the itinerary.

If pmode is 0 it means the user would not want to use that mode in the trip, so the entire itinerary receives a very low value by assigning that mode a very negative value, such as -∞. TABLE 7 shows the ranking on preferences as defined in TABLE 6.

TABLE 7: Ranking on preferences defined in TABLE 6

| | WALK DURATION | DRIVING DURATION | TRAM DURATION | BICYCLE DURATION | TRAIN DURATION | RANK WITH PREFERENCES |
|---|---|---|---|---|---|---|
| Example itinerary | 18 | 15 | 8 | 0 | 10 | 2.495 |
| Alternative #1 | 0 | 0 | 0 | 85 | 0 | 4.769 |
| Alternative #2 | 0 | 32 | 0 | 0 | 0 | 4.000 |
| maxD(mode) | 18 | 32 | 8 | 85 | 10 | |

Final ranking

Final (global) ranking (S212) can be a weighted average of ranking on goals and ranking on preferences. Each (or at least some) of the candidate itineraries thus receives a final ranking **102** (or score, which may be converted to a ranking). The weights may depend on the relative importance of goals and preferences. In an example embodiment, goals are considered to be more important than the preferences. In this case goals have a higher weight than preferences, e.g., goals have weight of 2 and preferences have a weight of 1.

TABLE 8 shows an example of final ranking.

TABLE 8: Example of final ranking

| | RANK WITH PREFS | RANK WITH GOALS | FINAL RANKING | INTERPRETATION |
|---|---|---|---|---|
| Example itinerary (walk, drive, train, tram) | 2.497 | +2.947 | +2.796 | This multimodal itinerary lasts 51 min and involves walking, tram and train, which are low on $CO_2$. The car is used briefly. This is a good balance between reducing eco-impact (very important) and saving time (important). |

(continued)

|  | RANK WITH PREFS | RANK WITH GOALS | FINAL RANKING | INTERPRETATION |
|---|---|---|---|---|
| Alternative #1 (bicycle) | +4.769 | -0.942 | +0.962 | This itinerary produces no $CO_2$. However, it lasts 85 min and thus doesn't match the very important inferred goal of saving time. |
| Alternative #2 (drive) | -1.564 | +4.000 | +0.290 | This itinerary responds well to the goal of saving time, but doesn't match the other stated and inferred goals or the preferences (the inferred preference for driving is low). |

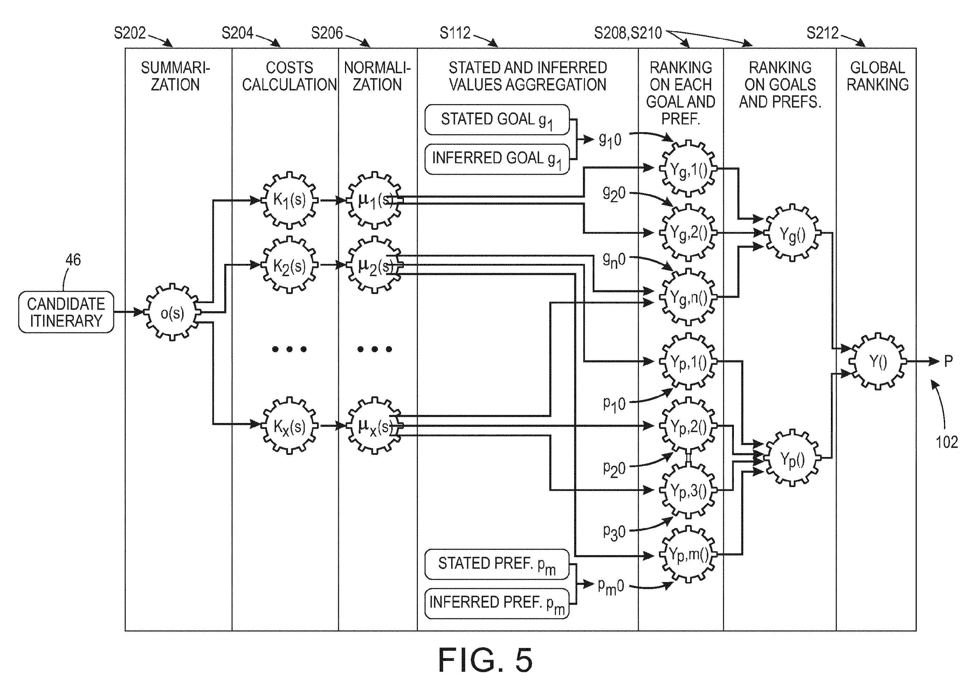

FIGURE 5 illustrates the exemplary utility function employed herein as an aggregation of the multiple objective functions.

The method illustrated in FIGURES 2 and 4 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other non-transitory medium from which a computer can read and use. The computer program product may be integral with the computer **30,** (for example, an internal hard drive of RAM), or may be separate (for example, an external hard drive operatively connected with the computer **30),** or may be separate and accessed via a digital data network such as a local area network (LAN) or the Internet (for example, as a redundant array of inexpensive of independent disks (RAID) or other network server storage that is indirectly accessed by the computer **30,** via a digital network).

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowchart shown in FIGURE 2 and/or 4, can be used to implement the trip ranking method. As will be appreciated, while the steps of the method may all be computer implemented, in some embodiments one or more of the steps may be at least partially performed manually. As will also be appreciated, the steps of the method need not all proceed in the order illustrated and fewer, more, or different steps may be performed.

Mixing statement and learning of preferences and goals

The exemplary system and method thus provide a profile scheme and a ranking function that can take into account evolution of the user's preferences and goals, and can also accommodate major changes.

When user preferences are stable, learning techniques, such as those proposed in Arentze, T. A., "Adaptive Personalized Travel Information Systems: A Bayesian Method to Learn Users' Personal Preferences in Multimodal Transport Networks", IEEE Trans. on Intelligent Transportation Systems, vol. 14, no. 4. (2013). and Zhang, J., et al., "Personalized multi-modal route planning: a preference measurement and learning-based approach," Proc. 11 th Int'l Conf. on Mobile and Ubiquitous Systems: Computing, Networking and Services, pp. 338-344 (2014), can be used to infer preferences from user travel choices. The inferred preferences tend to be more accurate than stated preferences, particularly when a learning phase involving acquisition of a certain amount of data is used. However, in such an approach, the amount of historical data weighs on the current inferred preferences and a change in the behavior of the user will only be fully taken into account after a certain amount of time (and choices).

The present method, which considers stated goals and preferences as well as inferred ones, enables the system to take into account the user's aspirations for change and also consider exceptional situations, at a stage well before a standard learning approach could update the inferred preferences. By increasing inferred values' coefficients over time after a statement, the increased accuracy of the inferences can be taken into account.

In addition, stating goals and preferences can enable the system to deal with sudden events that impact the trip (e.g., this week, the user has more time and will favor biking over car, which she usually prefers).

The following examples illustrate that the system can give a relevant ranking of candidate itineraries in different use cases:

Example 1: Initial situation, no preferences or goals are stated or inferred

In this situation, a set of default values for the stated preferences are established and stated goals are considered all equal to 0, except for the goal on saving time that is set to 1 (corresponding to the assumption that if not otherwise specified, a user would like to save time).

Example 2: Some preferences and goals are inferred

The user has made at least one choice about her trips and the system uses this data as well as the trip logs 70 for inferring the user's preferences and goals. For example, the system knows that the user generally prefers using her car (inferred preference 'driving' is set to 5, all other preferences are unknown) and aims at saving time (inferred goal 'save time' is set to 5, all other goals are left to 1). The system uses these inferred values for ranking the future requested trips.

Example 3: One goal is stated

The user states a goal. This resets the coefficients for inferred goals (in order to take into account the new data) and does not change those of the preferences.

Example 4: Some preferences are stated

The user states some preferences or changes some of them. Then the system resets the inferred preferences coefficients to 1 (and the coefficient of stated preferences is set to 12), as it considers that the user wants to change the system results. This mechanism gives the application the time to adapt to the new situation.

Example 5: Ranking candidate itineraries in an exceptional situation

The user is in a specific situation, which can correspond to an exceptional event, e.g., the usual transportation mode is not available or the user is in a hurry. Then, the user needs to use specific criteria corresponding to the situation and therefore selects a stereotypical profile 84. The preferences and goals associated to this profile are then used instead of the user's preferences and goals. In this specific case, the preferences are all set to "unknown" (except preferences that were set to 0 (meaning that the user really doesn't want to use the corresponding transportation mode: such preferences are considered as constraints, e.g. the user can't walk a long time and expresses this in her preferences), and thus are not modified. All goals are set to "undefined" (0), except the goal "save time", which is set to "very important" (5). Inferred goals are all set to 1 for breaking ties.

Example 6: User without preference but with a goal

In this case, the user has not expressed any preferences, but has specified at least one goal. In such a case, the stated preferences are not taken into account and the ranking module takes into account only the inferred preferences (if available) and the stated and inferred goal(s).

Example 7: Complete self-description

In this case, the user has completely filled in the stated preferences and goals of the user profile 36. The system considers both the stated and the inferred parameters in the ranking process, but considers the inferred parameters less important than the stated parameters. A change in stated preferences may occur at any time, resetting the inferred parameter coefficients. It can for example correspond to a user buying a bicycle and now wishing to use it or to someone whose physician has advised them to increase daily walking activity and who will set new preferences accordingly, expecting them to be taken into account immediately.

Some examples are now given of how the system reacts over time adapting itself to the following sequence of situations.

A. The user starts using the system without stating her preferences and goals;

B. After a while, the system has inferred the user's preferences and goals: the user generally prefers using the car and wants to save time;

C. The user states a goal, that is reducing eco-impact;

D. The user states some preferences: setting the bicycle to a high level of preference and the car to a low level;

E. Today the user is in a hurry

These various situations are considered in the ranking of the same set of itinerary alternatives for a requested trip from home to workplace:

1. Walking from home to the closest tram station (5 min), taking tram B (15 min), walking from the tram station to the user's workplace (3 min).

2. Walking from home to the closest bus station (7 min), taking bus 21 (4 min), waiting for bus 47 (4 min), taking bus 47 (5 min), walking from the bus station to the user's workplace (1 min).

3. Walking from home to the car's parking space (1 min), driving to the workplace (9 min), walking from parking space to the workplace (1 min).

4. Using bicycle from home to the workplace (17 min).

5. Walking from home to the workplace (46 min).

The costs corresponding to the alternatives are shown in TABLE 9.

TABLE 9: Alternatives and costs

| | Description | Duration (min) | $CO_2$ (g) | Monetary Cost ($) | Calories |
|---|---|---|---|---|---|
| Alt. #1 | Walk → Tram (8km) → Walk | 18 | 25 | 1.5 | 46 |
| Alt. #2 | Walk → Bus (3.9 km) → Bus (4.8 km) → Walk | 21 | 495 | 1.5 | 46 |
| Alt. #3 | Walk → Car (4.2km) → Walk | 11 | 1706 | 1.3 | 13 |
| Alt. #4 | Bicycle (4.1 km) | 17 | 0 | 0.0 | 135 |
| Alt. #5 | Walk (3.8km) | 46 | 0 | 0.0 | 264 |

After normalization, the costs are as shown in TABLE 10.

TABLE 10: Normalized Costs

| | Description | Duration | $CO_2$ | Monetary Cost | Calories |
|---|---|---|---|---|---|
| Alt. #1 | Walk → Tram (8km) → Walk | 1.983 | 4.719 | -5.000 | -3.121 |
| Alt. #2 | Walk → Bus (3.9 km) → Bus (4.8 km) → Walk | 0.690 | -0.197 | -5.000 | -3.121 |
| Alt. #3 | Walk → Car (4.2km) → Walk | 5.000 | -5.000 | -3.438 | -5.000 |
| Alt. #4 | Bicycle (4.1 km) | 2.414 | +5.000 | +5.000 | +1.048 |
| Alt. #5 | Walk (3.8km) | -5.000 | +5.000 | +5.000 | +5.000 |

Considering the sequence of situations A-E in the example, at the beginning the user has expressed no preferences or goals and only the inferred goal on saving time is set to 1. In this situation, neither the preferences nor the stated goals are taken into account as shown in TABLE 11.

TABLE 11: Case A

| | Description | Rank on Prefs | Rank on Goals | Global Rank |
|---|---|---|---|---|
| Alt. #1 | Walk → Tram (8km) → Walk | N/A | -0.355 | -0.355 |
| Alt. #2 | Walk → Bus (3.9 km) → Bus (4.8 km) → Walk | N/A | -1.907 | -1.907 |
| Alt. #3 | Walk → Car (4.2km) → Walk | N/A | -2.109 | -2.109 |
| Alt. #4 | Bicycle (4.1 km) | N/A | +3.365 | +3.365 |

(continued)

| | Description | Rank on Prefs | Rank on Goals | Global Rank |
|---|---|---|---|---|
| Alt. #5 | Walk (3.8km) | N/A | +2.500 | +2.500 |

According to these results, alternative #4 (using bicycle) is proposed as the best option, as its duration (17 min) is close to the best duration (11 min) and it minimizes the monetary cost, the eco-impact and leads to more physical activity than using tram, bus or car. The itinerary relying only on walking lasts so much longer that it is considered worse than using the bicycle.

However, the user chooses to use the car. The system thus infers first values for user's preferences and goals: that the user prefers using her car (inferred preference 'driving' is set to 5, all other preferences are unknown) and aims at saving time (inferred goal 'save time' is set to 5, all other inferred goals are left to 1), as shown in TABLE 12.

TABLE 12: Case B

| | Description | Rank of Prefs | Rank on Goals | Global Rank |
|---|---|---|---|---|
| Alt. #1 | Walk → Tram (8km) → Walk | N/A | +1.515 | +1.515 |
| Alt. #2 | Walk → Bus (3.9 km) → Bus (4.8 km) → Walk | N/A | +0.170 | +0.170 |
| Alt. #3 | Walk → Car (4.2km) → Walk | +5.000 | +3.578 | +4.052 |
| Alt. #4 | Bicycle (4.1 km) | N/A | +2.604 | +2.604 |
| Alt. #5 | Walk (3.8km) | N/A | -3.500 | -3.500 |

The best option proposed with these parameters is alternative #3, which corresponds to the inferred goal of saving time (it is the quickest one) and to the inferred preference of driving.

Then the user states a goal value of 3 for reducing eco-impact. This resets the inferred goals to the same value as the stated goals (or 1 for the non-stated goals), resets the stated goals coefficients to 12 and the inferred goals coefficient to 1 and does not change the preferences. The goals values are then (stated/inferred): save money=(0/1), save time=(0/1), reduce eco-impact=(3/3), increase physical activity=(0/1) as shown in TABLE 13.

TABLE 13: Case C

| | Description | Rank of Prefs | Rank on Goals | Global Rank |
|---|---|---|---|---|
| Alt. #1 | Walk → Tram (8km) → Walk | N/A | +3.028 | +3.028 |
| Alt. #2 | Walk → Bus (3.9 km) → Bus (4.8 km) → Walk | N/A | -0.767 | -0.767 |
| Alt. #3 | Walk → Car (4.2km) → Walk | +5.000 | -4.036 | -1.024 |
| Alt. #4 | Bicycle (4.1 km) | N/A | +4.455 | +4.455 |
| Alt. #5 | Walk (3.8km) | N/A | +4.167 | +4.167 |

The alternative by car is no longer the best one as saving time is no longer the main goal. Two alternatives make it possible to reduce eco-impact: using the bicycle and walking. As walking is much longer than using a bicycle, the best option is now alternative #4.

The user states some preferences: setting the tram to a high level and expresses a total dislike for using the bicycle. As already mentioned, when the user states or redefines her preferences, the system resets the inferred preferences coefficient to 1 (and the coefficient of stated preferences is set to 12), as it considers that the user wants to change the system results. This mechanism gives to the application the time to adapt to the new situation. The values of the preferences (stated/inferred) is now: driving (undefined/5), using tram (5/undefined), using bicycle (0/undefined) as shown in TABLE 14.

TABLE 14: Case D

| | Description | Rank of Prefs | Rank on Goals | Global Rank |
|---|---|---|---|---|
| Alt. #1 | Walk → Tram (8km) → Walk | +5.000 | +3.028 | +3.685 |

(continued)

| | Description | Rank of Prefs | Rank on Goals | Global Rank |
|---|---|---|---|---|
| Alt. #2 | Walk → Bus (3.9 km) → Bus (4.8 km) → Walk | N/A | -0.767 | -0.767 |
| Alt. #3 | Walk → Car (4.2km) → Walk | +5.000 | -4.036 | -1.024 |
| Alt. #4 | Bicycle (4.1 km) | -∞ | +5.000 | -∞ |
| Alt. #5 | Walk (3.8km) | N/A | 4.167 | +4.167 |

The best option in this context is then alternative #5. While option #1, using tram, is a transportation mode that the user has expressed liking, it is not the most highly-ranked option, since the user also expressed a goal of reducing her eco-impact. Using the tram is more polluting than walking: the combination of the various criteria places the walk as the optimal option. If the user prefers using the tram to walking, the user can, of course, state it explicitly by defining her preference value for walking or expressing the goal of saving time. However, even if the user does not do so, after a little time, the system will infer that the user does not like to walk (for instance, the user chooses to use the tram each time) and the inferred preferences will modify this ranking.

The user is in a hurry and she selects the corresponding stereotypical profile "In a hurry". The preferences and goals associated to this profile are used instead of the user's preferences and goals. In this specific case, the stated and inferred preferences are all set to "undefined" (except for those preferences that were set to 0, meaning that the user really does not want to use the corresponding transportation mode: such preferences are considered as constraints. In the example case, using bicycle remains considered as totally undesired and will not be modified). All stated goals are set to "undefined" (0), except the goal "save time", which is set to "very important" (5), inferred goals being all set to 1, as shown in TABLE 15.

TABLE 15: Case E

| | Description | Rank of Prefs | Rank on Goals | Global Rank |
|---|---|---|---|---|
| Alt. #1 | Walk → Tram (8km) → Walk | N/A | +1.485 | +1.485 |
| Alt. #2 | Walk → Bus (3.9 km) → Bus (4.8 km) → Walk | N/A | +0.136 | +0.136 |
| Alt. #3 | Walk → Car (4.2km) → Walk | N/A | 3.485 | +3.485 |
| Alt. #4 | Bicycle (4.1 km) | -∞ | 2.616 | -∞ |
| Alt. #5 | Walk (3.8km) | N/A | -3.402 | -3.402 |

Then the best option is alternative #3, using the car: this is indeed the quickest one.

The method for ranking itineraries can be implemented as a Web site. The ranking function can be written, for example in JavaScript. It accepts as input a set of candidate itineraries, e.g., as suggested by the trip planner of U.S. Application Ser. No. 14/450,628, and executes all steps describes above, producing a rank for each suggested itinerary.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

**Claims**

1. A method for assisting a user in planning a trip comprising:

    receiving a request for a trip from a user;
    accessing a user profile for the user, the user profile including user preferences for each of a plurality of transportation modes, user goals, and optionally user constraints on trips, the user preferences each including an inferred user preference value and, where stated, a stated user preference value, and the user goals each including an inferred user goal value and, where stated, a stated user goal value;
    building a set of candidate itineraries for the trip which meet the user's constraints, the candidate itineraries each specifying a respective set of the plurality of transportation modes;

for each of the user preferences, aggregating the stated preference value, where stated, and the inferred preference value to generate a weight for the preference;

for each of the user goals, aggregating the stated goal value, where stated, and the inferred goal value to generate a weight for the goal;

for each of the candidate itineraries, computing a cost for each of the goals;

with a processor, for each of the candidate itineraries, ranking the itinerary based on the preference weights, goal weights, and the computed cost for each of the goals; and

outputting information on at least a subset of the ranked itineraries for enabling the user to select an itinerary for the trip.

2. The method of claim 1, wherein the ranking includes computing a utility function as an aggregation of a plurality of objective functions, the plurality of objective functions including:

a first objective function that is a function of, for each of the goals, the goal weight and the respective computed cost of the candidate itinerary, for that goal; and

a second objective function that is a function of, for each of the user preferences, the preference weight and the computed contribution of the respective mode of transportation to the candidate itinerary.

3. The method of claim 1, wherein contribution of the respective mode of transportation is computed as a function of at least one of duration and distance in the itinerary of that transportation mode.

4. The method of claim 1, wherein in the aggregating of the stated preference value and the inferred preference value to generate a weight for the preference, includes computing a coefficient for at least one of the stated preference value and the inferred preference value, the coefficient being a function of a duration since the preference was last stated.

5. The method of claim 1, wherein in the aggregating of the stated goal value and the inferred goal value to generate a weight for the goal, includes computing a coefficient for at least one of the stated goal value and the inferred goal value, the coefficient being a function of a duration since the goal was last stated.

6. The method of claim 1, wherein the computing a cost for each of the goals includes projecting a computed cost related to the goal onto a common range of values.

7. The method of claim 1, wherein the goals include goals selected from a fitness goal, a cost saving goal, a time saving goal, and an environmental impact goal.

8. A system for planning a trip comprising:

a profile manager which manages, for each of a plurality of users, a respective user profile, the user profile including the user's preferences for each of a plurality of transportation modes, user goals, and optionally user constraints on trips, the user preferences each including an inferred user preference value and, where stated, a stated user preference value, and the user goals each including an inferred user goal value and, where stated, a stated user goal value;

a trip planner which builds a set of candidate itineraries for a trip requested by one of the users, which meet the user's constraints on trips, the candidate itineraries each specifying a respective set of the plurality of transportation modes;

an aggregation component which, for each of the user preferences, aggregates the stated preference value, where stated, and the inferred preference value to generate a weight for the preference and for each of the user goals, aggregates the stated goal value, where stated, and the inferred goal value to generate a weight for the goal;

a ranking component which ranks the candidate itineraries for each of the candidate itineraries based on the preference weights, goal weights, and a computed cost for each of the preferences and of the goals;

a representation generator which outputs information on at least a subset of the ranked itineraries for enabling the user to select an itinerary for the trip; and

a processor which implements the profile manager, trip planner, aggregation component, ranking component, and representation generator.

9. The system of claim 8, further comprising an update component which updates the user's inferred preferences and inferred goals based on at least one of:

information received from at least one of a mobility tracker and an activity tracker associated with the user; and the user's selected itinerary.

**10.** A method comprising:

providing for a user to state preference values for each of a plurality of transportation modes;
providing for the user to state goal values for each of a plurality of goals to which the transportation modes employed in a trip itinerary contribute differently;
optionally, providing for the user to state a constraint for at least one of the transportation modes;
generating a user profile for the user, the user profile including user preferences for each of a plurality of transportation modes, user goals, and optionally user constraints on trips, the user preferences each including an inferred user preference value and, where stated, the stated user preference value, and the user goals each including an inferred user goal value and, where stated, the stated user goal value, the inferred user goal values and inferred user preference values being based on prior user behavior;
for each of a set of candidate itineraries for a trip, ranking the candidate itinerary, the ranking comprising computing a utility function which takes into account the stated and inferred preferences and stated and inferred goals and coefficients which place a weight on the inferred goals and inferred preferences as a function of a duration since the respective goal or preference was last stated; and
outputting information based on the ranking; and

wherein the generating a user profile and ranking the candidate itineraries is performed with a processor.

FIG. 1

S100 — ( START )

↓

S102 — USER REGISTERS WITH THE SYSTEM
AND MAY SUPPLY INFORMATION

↓

S104 — GENERATE/UPDATE USER PROFILE

↓

S106 — RECEIVE TRIP REQUEST

↓

S108 — ACCESS USER PROFILE TO IDENTIFY
CONSTRAINTS, GOALS AND PREFERENCES

↓

S110 — BUILD SET OF CANDIDATE ITINERARIES WHICH
MEET THE USER'S CONSTRAINTS

↓

S112 — AGGREGATE STATED AND INFERRED GOALS AND
PREFERENCES THAT ARE APPLICABLE TO
THE CANDIDATE ITINERARIES

↓

S114 — RANK CANDIDATE ITINERARIES WITH A UTILITY FUNCTION
WHICH IS AN AGGREGATE OF OBJECTIVE FUNCTIONS OF
THE AGGREGATED PREFERENCES AND GOALS

↓

S116 — PRESENT PROPOSED ITINERARIES TO USER
FROM RANKED SET

↓

S118 — RECEIVE USER'S ITINERARY SELECTION

↓

S120 — ASSIST USER IN NAVIGATING ROUTE OF
SELECTED ITINERARY

↓

S124 — ( END )

S122 — ACQUIRE DATA FROM USER
MONITORING DEVICES
AND CLIENT DEVICE

# FIG. 2

| PREFERENCES | MODE PREFERENCES | | | | | | REDUCE NO OF TRANSFERS | ... |
|---|---|---|---|---|---|---|---|---|
| | WALK | DRIVE | BIKE | BUS | TRAIN | TRAM | | |
| STATED | 4 | 3 | 0 | 5 | 2 | 1 | 3 | |
| INFERRED | 3 | 4 | 0 | 5 | 3 | 1 | 4 | |
| LAST UPDATED | 6 | 6 | 1 | 6 | 6 | 1 | 6 | |

| GOALS | PHYSICAL FITNESS | ENVIRONMENT | TIME | MONETARY COST |
|---|---|---|---|---|
| STATED | 3 | 4 | 2 | 4 |
| INFERRED | 3 | 2 | 3 | 3 |
| LAST UPDATED | 6 | 6 | 6 | 6 |

| CONSTRAINTS | NOT CAR | NOT BIKE | WHEEL-CHAIR | MAX NUM TRANSFERS |
|---|---|---|---|---|
| STATED | | 1 | | 4 |
| INFERRED | | | | |
| LAST UPDATED | | 1 | | 6 |

STEREOTYPICAL PROFILES

| IN A HURRY | STUDENT | MOBILITY IMPAIRED | VISITOR | ... |
|---|---|---|---|---|
| 1 | | | | |

FIG. 3

24

FIG. 4

FIG. 5

Europäisches
Patentamt

European
Patent Office

Office européen
des brevets

# EUROPEAN SEARCH REPORT

**Application Number**

EP 16 18 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Waybackmachine: "ViaMichelin: Michelin route planner and maps, restaurants, traffic news and hotel booking", , 22 November 2013 (2013-11-22), XP055325811, Retrieved from the Internet: URL:https://web.archive.org/web/2013112211 5136/http://www.viamichelin.com/ [retrieved on 2016-12-05] * page 1 * | 1-10 | INV. G06Q10/02 G01C21/00 |
| X | US 2010/305984 A1 (BEN-YITSCHAK OPHIR [US] ET AL) 2 December 2010 (2010-12-02) * paragraph [0014] - paragraph [0065]; claims 1-11; figures 2-5 * | 1-10 | |
| X | WO 01/93099 A1 (COMPUDIGM INT LTD [NZ]; CARDNO ANDREW JOHN [NZ]; MULGAN NICHOLAS JOHN) 6 December 2001 (2001-12-06) * page 3 - page 9 * | 1-10 | |
| X | US 2013/006521 A1 (NEEDHAM BRADFORD H [US] ET AL) 3 January 2013 (2013-01-03) * paragraph [0012] - paragraph [0053]; claims 1-12 * | 1-10 | TECHNICAL FIELDS SEARCHED (IPC) G06Q G01C |
| X | WO 2009/023219 A1 (SPEIER GARY J [US]; LUNDBERG STEVEN W [US]; ARMITAGE BENJAMIN C [US]) 19 February 2009 (2009-02-19) * page 7 - page 18 * | 1-10 | |

-/--

The present search report has been drawn up for all claims

| Place of search | Date of completion of the search | Examiner |
|---|---|---|
| Munich | 2 January 2017 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 18 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wikipedia: "ViaMichelin - Wikipedia", , 17 January 2014 (2014-01-17), XP055325808, Retrieved from the Internet: URL:https://en.wikipedia.org/w/index.php?title=ViaMichelin&oldid=591098358 [retrieved on 2016-12-05] * page 1 * ----- | 1-10 | |
| X | WO 2010/081836 A1 (TELE ATLAS BV [NL]; TSIOBBEL STEPHEN [BE]; BASTIAENSEN EDWIN [BE]; VA) 22 July 2010 (2010-07-22) * paragraph [0013] - paragraph [0055] * ----- | 1-10 | |

TECHNICAL FIELDS
SEARCHED      (IPC)

The present search report has been drawn up for all claims

| Place of search | Date of completion of the search | Examiner |
|---|---|---|
| Munich | 2 January 2017 | Lavin Liermo, Jesus |

EPO FORM 1503 03.82 (P04C01)

## ANNEX TO THE EUROPEAN SEARCH REPORT
## ON EUROPEAN PATENT APPLICATION NO.

EP 16 18 3224

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2017

| Patent document cited in search report | | | Publication date | Patent family member(s) | | | Publication date |
|---|---|---|---|---|---|---|---|
| US 2010305984 | A1 | | 02-12-2010 | NONE | | | |
| WO 0193099 | A1 | | 06-12-2001 | AU | 6794201 | A | 11-12-2001 |
| | | | | EP | 1222578 | A1 | 17-07-2002 |
| | | | | NZ | 504934 | A | 29-08-2003 |
| | | | | US | 2002128767 | A1 | 12-09-2002 |
| | | | | WO | 0193099 | A1 | 06-12-2001 |
| US 2013006521 | A1 | | 03-01-2013 | CN | 103620640 | A | 05-03-2014 |
| | | | | EP | 2727075 | A1 | 07-05-2014 |
| | | | | JP | 5932030 | B2 | 08-06-2016 |
| | | | | JP | 2014517330 | A | 17-07-2014 |
| | | | | KR | 20140025543 | A | 04-03-2014 |
| | | | | US | 2013006521 | A1 | 03-01-2013 |
| | | | | WO | 2013003628 | A1 | 03-01-2013 |
| WO 2009023219 | A1 | | 19-02-2009 | US | 2009048771 | A1 | 19-02-2009 |
| | | | | US | 2013080055 | A1 | 28-03-2013 |
| | | | | WO | 2009023219 | A1 | 19-02-2009 |
| WO 2010081836 | A1 | | 22-07-2010 | EP | 2387698 | A1 | 23-11-2011 |
| | | | | EP | 2387699 | A1 | 23-11-2011 |
| | | | | TW | 201031893 | A | 01-09-2010 |
| | | | | TW | 201037278 | A | 16-10-2010 |
| | | | | US | 2011307165 | A1 | 15-12-2011 |
| | | | | US | 2011307166 | A1 | 15-12-2011 |
| | | | | US | 2013245943 | A1 | 19-09-2013 |
| | | | | WO | 2010081836 | A1 | 22-07-2010 |
| | | | | WO | 2010081837 | A1 | 22-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5021953 A
- US 6622084 B
- US 7925540 B
- US 8494771 B
- US 8583363 B
- US 8712676 B

- US 8725612 B
- US 8738286 B
- US 20130317742 A
- US 73796415 A
- US 45062814 A
- US 450628 A

**Non-patent literature cited in the description**

- **F. ROULLAND et al.** Learning mobility user choice and demand models from public transport fare collection data. *Intelligent Transport Systems, 21st World Congress,* 08 April 2015
- **REHRL, K. et al.** Assisting Multimodal Travelers: Design and Prototypical Implementation of a Personal Travel Companion. *Intelligent Transportation Systems, IEEE Trans. on Intelligent Transportation Systems,* 2007, vol. 8 (1), 31-42
- **ROY, B.** Problems and methods with multiple objective functions. *Mathematical Programming,* 1971, vol. 1 (1), 239-266

- **DIDIER, J.-P. et al.** Energy cost and cardiorespiratory responses while walking in two groups of young and elderly people. *Annales de Réadaptation et de Médecine Physique,* 1995, vol. 38, 475-480
- **ARENTZE, T. A.** Adaptive Personalized Travel Information Systems: A Bayesian Method to Learn Users' Personal Preferences in Multimodal Transport Networks. *IEEE Trans. on Intelligent Transportation Systems,* 2013, vol. 14 (4
- **ZHANG, J. et al.** Personalized multi-modal route planning: a preference measurement and learning-based approach. *Proc. 11 th Int'l Conf. on Mobile and Ubiquitous Systems: Computing, Networking and Services,* 2014, 338-344